# EUROPEAN PATENT APPLICATION

(11) **EP 4 832 214 A1**
(43) Date of publication of application: **28.10.2026**
(21) Application number: 25866559.5
(22) Date of filing: 12.09.2025
(51) Int. Cl.: H01M 50/325, H01M 50/249, H01M 50/204, H01M 50/502, B60L 50/64

(54) **BATTERY PACK AND VEHICLE INCLUDING SAME**

(30) Priority: 12.09.2024 KR 20240125063; 04.09.2025 US 202519319515
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR); PARK, Gi-Chan, Daejeon 34122 (KR)
(74) Representative: Plasseraud IP
(86) International application number: PCT/KR2025/014274
(87) International publication number: WO 2026/059387

(57) **Abstract**

A battery pack according to the present disclosure includes: a battery assembly including a plurality of battery cells; a pack case in which an accommodation space is defined to accommodate the battery assembly; at least one first vent hole provided on a first side of the battery assembly; a vent space provided on the first side of the first vent hole and formed in the pack case; and a backflow preventing member having at least one opening/closing portion disposed to correspond to the first vent hole. The opening/closing portion is opened to allow communication between the first vent hole and the vent space when an internal pressure of the battery assembly reaches or exceeds a predetermined reference value.

## Description

### TECHNICAL FIELD

The present disclosure relates to a battery pack and a vehicle including the same.

This application is based on and claims priority from Korean Patent Application No. 10-2024-0125063 filed on September 12, 2024, with the Korean Intellectual Property Office, and U.S. Patent Application No. 19/319,515, filed on September 4, 2025, with the United States Patent and Trademark Office, the disclosures of which are incorporated herein in their entireties by reference.

### BACKGROUND ART

Secondary batteries, which have high applicability depending on the product group and electrical characteristics such as high energy density, are universally applied not only to the portable devices but also to the electric vehicles (EVs) or hybrid vehicles (HEVs) that are driven by electrical driving sources. Such secondary batteries are attracting attention as a new energy source for enhancing eco-friendliness and energy efficiency, not only because they have the primary advantage of drastically reducing the use of fossil fuels, but also because they generate no by-products from the use of energy.

Types of currently and widely used secondary batteries include, for example, lithium ion batteries, lithium polymer batteries, nickel cadmium batteries, nickel hydrogen batteries, and nickel zinc batteries. When a high output voltage is required, a battery module or a battery pack may be configured by connecting a plurality of battery cells in series. In addition, in order to increase charge and discharge capacity, a battery module or a battery pack may also be configured by connecting a plurality of battery cells in parallel. Accordingly, the number of battery cells included in the battery module or pack may be variously set depending on the required output voltage or charge and discharge capacity.

When a battery pack is configured by connecting a plurality of battery cells in series and/or in parallel, it is common to first configure a battery module including at least one battery cell, and to configure a battery pack or a battery rack by using the at least one battery module and adding other components. Recently, battery packs in a cell-to-pack (CTP) form, in which multiple battery cells are directly accommodated, for example, in a pack housing without being modularized, have also been manufactured.

### DISCLOSURE

### Technical Problem

The present disclosure provides a battery pack and a vehicle including the same, which may effectively prevent or suppress backflow of discharged vent gas.

The present disclosure also provides a battery pack and a vehicle including the same, in which the vent gas may be guided only in a specific direction.

The present disclosure also provides a battery pack and a vehicle including the same, in which a thermal event may be effectively suppressed.

The present disclosure also provides a battery pack and a vehicle including the same, which may effectively prevent or suppress propagation of a thermal event.

The present disclosure also provides a battery pack and a vehicle including the same, which may minimize internal damage.

The present disclosure also provides a battery pack and a vehicle including the same, which may allow easy design modifications.

The present disclosure also provides a battery pack and a vehicle including the same, which may have improved productivity or manufacturability.

The technical problems to be solved by the present disclosure are not limited to those described above, and other problems not mentioned will be clearly understood by those ordinarily skilled in the art from the description of the invention given below.

### Technical Solution

A battery pack according to an embodiment of the present disclosure includes: a battery assembly including a plurality of battery cells; a pack case in which an accommodation space is defined to accommodate the battery assembly; at least one first vent hole provided on a first side of the battery assembly; a vent space provided on the first side of the first vent hole and formed in the pack case; and a backflow preventing member having at least one opening/closing portion disposed to correspond to the first vent hole. The opening/closing portion is opened to allow communication between the first vent hole and the vent space when an internal pressure of the battery assembly reaches or exceeds a predetermined reference value.

The opening/closing portion may be closed to block communication between the first vent hole and the vent space when the internal pressure of the battery assembly is below the predetermined reference value.

The opening/closing portion may include a fixed end fixed to the backflow preventing member, and an opening end disposed apart from the fixed end on one side and configured to open when the internal pressure of the battery assembly reaches or exceeds the predetermined reference value.

The pack case may include a bottom unit disposed apart from the battery assembly on the first side, and the vent space may be defined in a space between the battery assembly and the bottom unit. The distance between the fixed end and the opening end may be greater than the distance between the battery assembly and the bottom unit.

The backflow preventing member may include a material having rigidity and flame-resistant properties.

The first vent hole may include a (1-1)^{th} vent hole positioned substantially at the center of the battery assembly, and a (1-2)^{th} vent hole positioned outside the (1-1)^{th} vent hole in the battery assembly. The opening/closing portion may include a first opening/closing portion corresponding to the (1-1)^{th} vent hole, and a second opening/closing portion corresponding to the (1-2)^{th} vent hole.

The backflow preventing member may be provided in the form of a plate, and the opening/closing portion may be integrally formed with the backflow preventing member.

The opening/closing portion may be formed by notching the backflow preventing member.

The opening/closing portion may be formed by slitting the backflow preventing member.

The battery pack according to the present disclosure may further include a bottom plate disposed between the battery assembly and the pack case and having a second vent hole formed to correspond to the first vent hole. The bottom plate may be configured to support the battery assembly.

The rigidity of the bottom plate may be greater than the rigidity of the backflow preventing member.

The size of the opening/closing portion may be larger than the size of the first vent hole or the size of the second vent hole.

The first side may be a lower side.

An opposite side to the first side may be a second side, and a cooling member configured to cool the battery assembly may be further disposed on the second side of the battery assembly.

The pack case may include a venting device allowing communication between the vent space and the outside.

The pack case may further include a partition frame partitioning the accommodation space, a plurality of battery assemblies accommodated in the accommodation space; a connection busbar electrically connecting one of the battery assemblies to another battery assembly across the partition frame; and a sealing member configured to seal the connection busbar.

A vehicle according to the present disclosure includes at least one battery pack according to the present disclosure.

### Advantageous Effects

According to the present disclosure, a battery pack and a vehicle including the same may be provided, which may effectively prevent or suppress backflow of discharged vent gas.

In addition, a battery pack and a vehicle including the same may be provided, in which the vent gas may be guided only in a specific direction.

In addition, a battery pack and a vehicle including the same may be provided, in which a thermal event may be effectively suppressed.

In addition, a battery pack and a vehicle including the same may be provided, which may effectively prevent or suppress propagation of a thermal event.

In addition, a battery pack and a vehicle including the same may be provided, which may allow easy design modifications.

In addition, a battery pack and a vehicle including the same may be provided, which may minimize internal damage.

In addition, a battery pack and a vehicle including the same may be provided, which may have improved productivity or manufacturability.

The effects of the present disclosure are not limited to the aforementioned effects, and other effects not mentioned may be clearly understood by those ordinarily skilled in the art from the present specification and the accompanying drawings.

### DESCRIPTION OF DRAWINGS

The following drawings attached hereto illustrate embodiments of the present disclosure and serve to further understand the technical idea of the present disclosure together with the content of the disclosure described above. Therefore, the present disclosure should not be construed as being limited to the matters illustrated in the drawings.
FIG. 1 is a perspective view illustrating an overall configuration of a battery pack according to an embodiment of the present disclosure.
FIG. 2 is an exploded perspective view illustrating the battery pack according to an embodiment of the present disclosure.
FIG. 3 is a perspective view illustrating an overall configuration of a battery assembly according to an embodiment of the present disclosure.
FIG. 4 is a plan view illustrating a backflow preventing member according to an embodiment of the present disclosure.
FIG. 5 is an enlarged side cross-sectional view illustrating a portion of a cross-section taken along line I-I' of FIG. 1.
FIG. 6 is an enlarged side cross-sectional view illustrating portion A of FIG. 5.
FIGS. 7A to 7C are a plan view and cross-sectional views illustrating a backflow preventing member according to an embodiment of the present disclosure.
FIGS. 8A to 8C are a plan view and cross-sectional views illustrating a backflow preventing member according to a modification of an embodiment of the present disclosure.
FIG. 9 illustrates a battery cell according to an embodiment of the present disclosure.
FIG. 10 is an exploded perspective view of a battery assembly according to another embodiment of the present disclosure, illustrating a state in which a bottom plate is disposed between the battery assembly and a backflow preventing member.
FIG. 11 is a side cross-sectional view illustrating a battery pack according to another embodiment of the present disclosure.
FIG. 12 is an enlarged side cross-sectional view illustrating portion A of FIG. 11.
FIG. 13 is a side cross-sectional view illustrating another portion of a cross-section taken along line I-I' of FIG. 1.
FIG. 14 is a cross-sectional view illustrating a portion of the cross-section taken along line II-II' of FIG. 1.
FIG. 15 is an enlarged side cross-sectional view illustrating portion B of FIG. 5 or FIG. 11.
FIG. 16 is an enlarged perspective view illustrating a portion of a pack case of a battery pack according to an embodiment of the present disclosure.
FIG. 17 is a view illustrating a vehicle according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Hereinafter, embodiments of the present disclosure will be described in detail with reference to the accompanying drawings. Prior to this, the terms or words used in the specification and claims should not be construed as limited to their ordinary or dictionary meanings, but should be construed in accordance with meanings and concepts consistent with the technical idea of the present disclosure based on the principle that an inventor may appropriately define the concepts of terms in order to explain their invention in the best way.

Accordingly, since the embodiments described in this description and the configurations illustrated in the drawings are merely some embodiments of the present disclosure, and do not represent all of the technical ideas of the present disclosure, it should be understood that at the time of filing, there may be various equivalents and modifications that could serve as alternatives to the embodiments.

When a large number of battery cells are included in a battery pack, the battery pack may be vulnerable to thermal chain reactions between battery cells or between battery modules. For example, when a thermal event such as thermal runaway occurs in any one of the battery cells, such a thermal event may propagate to other battery cells or battery modules. When such thermal runaway propagation is not properly suppressed, the thermal event that occurred in a specific battery cell may cause a chain reaction in other battery cells or battery modules, leading to serious problems such as explosions or fires.

In a conventional battery pack, when a thermal event occurs in a battery cell, high-temperature ejected materials, such as hot gas, flame, and solid ejected materials, could be discharged upward from the battery cell or the battery pack, and/or toward the inner side of the pack case. In such a conventional battery pack, it has been difficult for the high-temperature ejected materials to be smoothly and fully discharged to the outside, and there has been a problem in that the high-temperature ejected materials could flow back into the battery cells or battery modules, accelerating thermal propagation.

The present disclosure provides a battery pack structure that, even when a thermal event occurs in a battery cell, enables high-temperature ejected materials to be smoothly and fully discharged to the outside while preventing or suppressing the high-temperature ejected materials from flowing back into the same or another battery cell or battery module, thereby effectively suppressing or delaying thermal propagation.

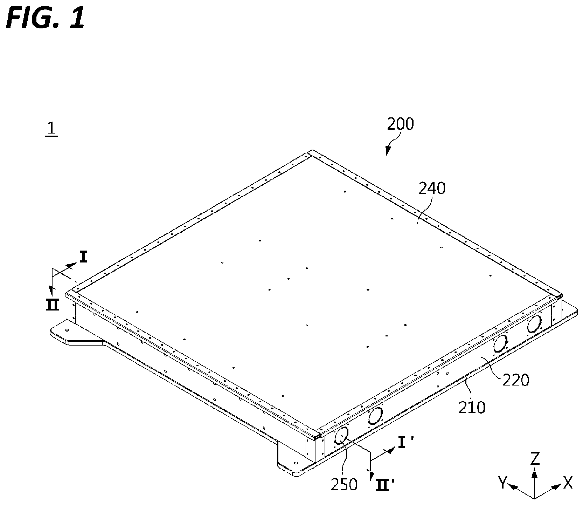

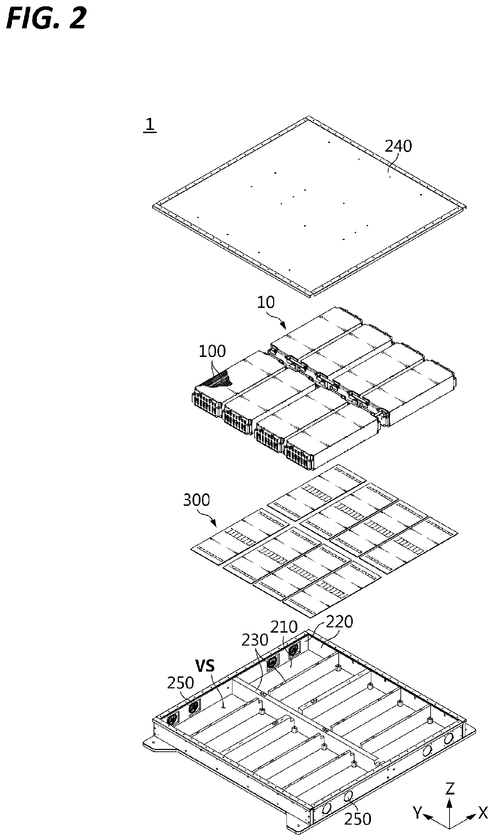

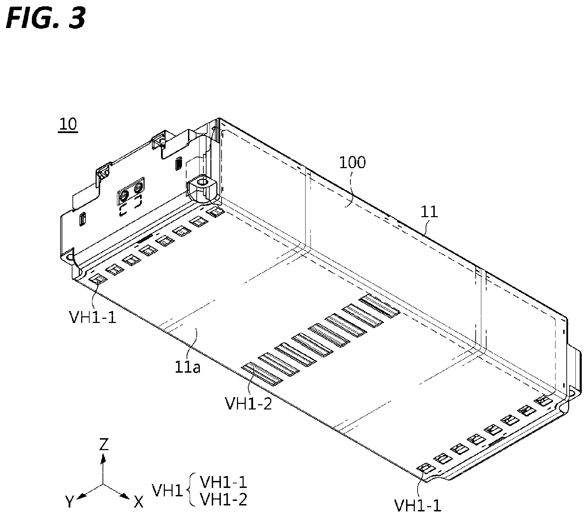

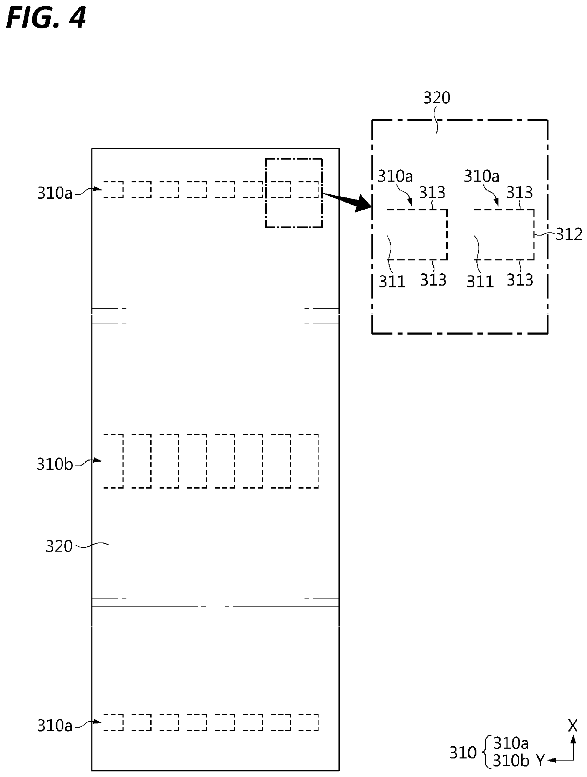

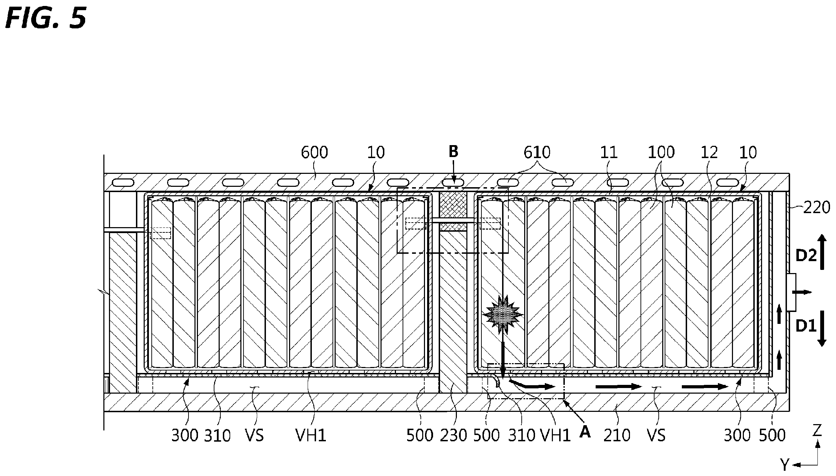

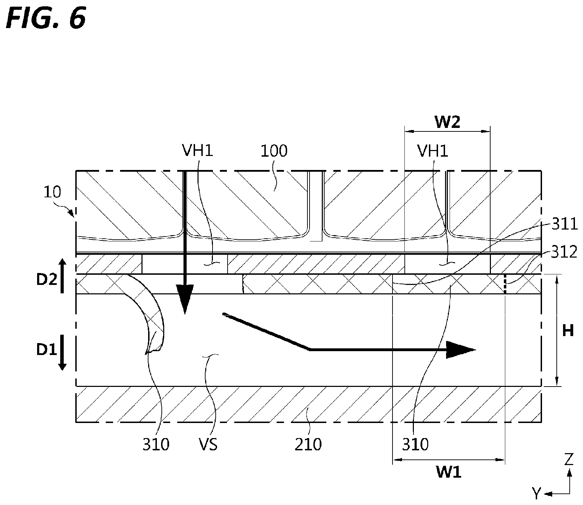

FIG. 1 is a perspective view illustrating an overall configuration of a battery pack according to an embodiment of the present disclosure, FIG. 2 is an exploded perspective view illustrating the battery pack according to an embodiment of the present disclosure, FIG. 3 is a perspective view illustrating an overall configuration of a battery assembly according to an embodiment of the present disclosure, FIG. 4 is a plan view illustrating a backflow preventing member according to an embodiment of the present disclosure, FIG. 5 is an enlarged side cross-sectional view illustrating a portion of a cross-section taken along line I-I' of FIG. 1, and FIG. 6 is an enlarged side cross-sectional view illustrating portion A of FIG. 5.

Hereinafter, a battery pack 1 according to an embodiment of the present disclosure will be described in detail with reference to FIGS. 1 to 6. A battery pack 1 according to an embodiment of the present disclosure may include a battery assembly 10, a pack case 200, a first vent hole VH1, a venting space S, and a backflow preventing member 300.

The battery assembly 10 may include a plurality of battery cells 100. The battery assembly 10 may have a predetermined length, width, and height in the X direction, Y direction, and Z direction, respectively.

In the battery assembly 10, the plurality of battery cells 100 may be stacked and arranged. For example, the plurality of battery cells 100 may be stacked in a vertically standing state (in the Z-axis direction) along the width direction or the Y-axis direction of the battery assembly 10. When the plurality of battery cells 100 are arranged in this manner, control of the discharge direction of vent gas VG, which will be described later, toward one side may be facilitated.

The pack case 200 may be configured to accommodate the battery assembly 10. An accommodation space S in which the battery assembly 10 is accommodated may be defined in the pack case 200. The pack case 200 may accommodate a plurality of battery assemblies 10.

The first side D1 of the battery assembly 10 may be provided with a first vent hole VH1. Here, the first side D1 may refer to the side in a first direction. The first direction may be understood, for example, as the -Z direction. At least one first vent hole VH1 may be provided. Alternatively, the first vent hole VH1 may be provided to correspond to each of the plurality of battery cells 100.

The first vent hole VH1 may be a hole through which vent gas VG may pass. When a thermal event occurs in any of the battery cells 100 of the battery assembly 10, high-temperature gas, flame, and solid ejected materials may be discharged from the battery cell 100, and these may be collectively referred to as vent gas VG. Since the first side D1 of the battery assembly 10 may be provided with the first vent hole VH1, the vent gas VG discharged from the battery cell 100 may be discharged from the battery assembly 10 toward the first side D1.

Meanwhile, an opposite side of the first side D1 may be a second side D2. The second side D2 may be a side in a second direction opposite to the first direction. The second direction may be understood, for example, as the +Z direction.

A vent space VS may be disposed on the first side D1 of the first vent hole VH1. The vent space VS may be provided in the pack case 200. The vent space VS may be understood as a space through which vent gas VG flows. The vent space VS may be disposed on the first side D1 of the battery assembly 10. In this case, the first vent hole VH1 may be disposed between the battery assembly 10 and the vent space VS.

The backflow preventing member 300 may have a configuration in which an opening/closing portion 310 is formed. The backflow preventing member 300 may include at least one opening/closing portion 310.

The opening/closing portion 310 may be disposed corresponding to the first vent hole VH1. The opening/closing portion 310 may be provided in a number and position corresponding to the first vent hole VH1. The opening/closing portion 310 may be provided to cover the first vent hole VH1. For example, as illustrated in FIGS. 2 and 5, the opening/closing portion 310 may be disposed on the first side D1 of the first vent hole VH1. However, the opening/closing portion 310 may be disposed on the second side D2 of the first vent hole VH1, different from what is illustrated in the drawings.

The opening/closing portion 310 may be designed to open when the internal pressure of the battery assembly 10 reaches or exceeds a predetermined reference value. Here, the term "internal pressure" may be understood as the pressure formed by vent gas VG generated when a thermal event occurs in any of the battery cells 100 of the battery assembly 10. When the opening/closing portion 310 is opened, it may allow communication between the first vent hole VH1 and the vent space VS. In this case, the vent gas VG discharged from the battery cell 100 may pass through the first vent hole VH1 and the opened opening/closing portion 310 to be discharged into the vent space VS.

In the battery pack 1 according to the present disclosure, by virtue of the first vent hole VH1 provided on the first side D1, the vent gas VG generated in the battery cell 100 due to the thermal event may be discharged only toward the first side D1 and not toward the second side D2. Furthermore, the discharged vent gas VG may not flow back into the same or another battery cell 100. Accordingly, the thermal event in the battery cell 100 may be effectively suppressed, and propagation of the thermal event to another battery cell 100 or the battery assembly 10 may also be effectively prevented or suppressed.

Referring to FIGS. 5 and 6, when the internal pressure of the battery assembly 10 is below the predetermined reference value, the opening/closing portion 310 may remain closed so as to block communication between the first vent hole VH1 and the vent space VS. In this case, the opening/closing portion 310 may be maintained in a closed state without being opened, thereby isolating the first vent hole VH1 from the vent space VS from each other.

When the opening/closing portion 310 is configured as described above, it may open under conditions in which sufficient internal pressure is generated by the vent gas VG (*e.g.,* when the internal pressure reaches or exceeds the predetermined reference value), and may otherwise remain closed. Thus, smooth discharge of the vent gas VG and prevention or suppression of backflow of the vent gas VG may be more effectively achieved.

The battery assembly 10 may include an assembly housing 11, as illustrated in FIG. 3. A plurality of battery cells 100 may be accommodated in the assembly housing 11. The assembly housing 11 may form the overall external shape of the battery assembly 10. The first vent hole VH1 may be formed, for example, on the first side D1 of the assembly housing 11. The assembly housing 11 may include a bottom cover 11a that surrounds a bottom portion of the assembly housing 11, and the first vent hole VH1 may be provided in the bottom cover 11a.

Meanwhile, as illustrated in FIG. 5, the plurality of battery cells 100 may be stacked along the width direction or the Y-axis direction of the assembly housing 11, and a barrier 12 may be disposed between any two battery cells 100. The barrier 12 may include an elastic material to allow absorption of swelling and may include a material capable of blocking heat or flame, for example.

The opening/closing portion 310 may include a fixed end 311 and an opening end 312, as illustrated in FIG. 4. The fixed end 311 may be a portion fixed to the backflow preventing member 300. The backflow preventing member 300 may include a main body 320, which is a portion excluding the opening/closing portion 310. The fixed end 311 may be an end portion of the opening/closing portion 310 fixed to the main body 320. When the opening end 312 of the opening/closing portion 310 is opened, as will be described later, the fixed end 311 may serve as a portion where a rotation axis of the opening/closing portion 310 is formed.

The opening end 312 may be an end portion configured to open when the internal pressure of the battery assembly 10 reaches or exceeds the predetermined reference value. The opening end 312 may be disposed apart from the fixed end 311 on one side.

As described above, when the opening/closing portion 310 includes the fixed end 311 and the opening end 312, the opening/closing portion 310 may open only at the opening end 312, allowing the opening/closing portion 310 to open toward one direction only. As a result, the vent gas VG passing through the opening/closing portion 310 may be easily guided in one direction.

Meanwhile, the opening/closing portion 310 may further include connecting ends 313. The connecting ends 313 may be understood as end portions located between the fixed end 311 and the opening end 312. The connecting ends 313 may constitute partial areas on both sides of the opening end 312. The opening end 312 and the connecting ends 313 may be provided in an overall curved shape, in which case the opening end 312 and the connecting ends 313 may be collectively defined as a single opening end 312.

The pack case 200 may include a bottom unit 210, as illustrated in FIGS. 1 and 2. The bottom unit 210 may be disposed apart from the battery assembly 10 toward the first side D1. The bottom unit 210 may form a bottom surface of the accommodation space S. A vent space VS may be formed in a space between the battery assembly 10 and the bottom unit 210 that are spaced apart from each other.

Referring to FIG. 6, a distance W1 between the fixed end 311 and the opening end 312 of the opening/closing portion 310 may be formed larger than a distance H between the battery assembly 10 and the bottom unit 210.

When the opening/closing portion 310 is configured as described above, if the opening end 312 is opened by the vent gas VG while rotating around the fixed end 311 as a rotation axis, the rotation of the opening end 312 may be blocked by the bottom unit 210. Accordingly, bending of the opening end 312 of the opening/closing portion 310 toward the opposite side may be prevented or suppressed. For example, referring to FIG. 6, the opening end 312 may be opened only toward the right side or the -Y direction side and may not be opened toward the left side or the +Y direction side.

The backflow preventing member 300 may include a material having rigidity and flame-resistant properties. For example, the backflow preventing member 300 may include a metal material or an SUS material having sufficient rigidity as well as flame-resistant properties.

Thus, when the backflow preventing member 300 includes a material having rigidity and flame-resistant properties, even if the backflow preventing member 300 is directly exposed to high-temperature and high-pressure vent gas VG at the first vent hole VH1, the backflow preventing member 300 may not melt or break and maintain the shape thereof.

Referring to FIG. 3, the first vent hole VH1 may include a (1-1)^{th} vent hole VH1-1 and a (1-2)^{th} vent hole VH1-2. The (1-2)^{th} vent hole VH1-2 may be positioned substantially at the center of the battery assembly 10. The (1-2)^{th} vent hole VH1-2 may be positioned, for example, substantially at the center of the bottom cover 11a in the X-axis direction.

The (1-1)^{th} vent hole VH1-1 may be positioned on the outer side of the (1-2)^{th} vent hole VH1-2. The (1-1)^{th} vent hole VH1-1 may be positioned, for example, on the -X direction side and/or the +X direction side of the (1-2)^{th} vent hole VH1-2.

Referring to FIG. 4, the opening/closing portion 310 may include a first opening/closing portion 310a and a second opening/closing portion 310b. According to an embodiment, the first opening/closing portion 310a may correspond to the (1-1)^{th} vent hole VH1-1. The second opening/closing portion 310b may correspond to the (1-2)^{th} vent hole VH1-2.

As described above, when the first vent hole VH1 includes a (1-1) ^{th} vent hole VH1-1 and a (1-2) ^{th} vent hole VH1-2, and the opening/closing portion 310 includes a first opening/closing portion 310a and a second opening/closing portion 310b, there may be an advantage in that vent gas VG may be smoothly discharged from various positions of the battery assembly 10.

The backflow preventing member 300 may be provided in a plate shape. In addition, the opening/closing portion 310 may be integrally formed with the backflow preventing member 300. For example, as illustrated in FIG. 2, the backflow preventing member 300 may be provided in a plate shape, and as illustrated in FIG. 4, the opening/closing portion 310 may be integrally formed with the main body 320.

As described above, when the opening/closing portion 310 is integrally formed with the backflow preventing member 300, the backflow preventing member 300 having the opening/closing portion 310 may be manufactured by processing a single plate member, thereby improving the productivity or manufacturability of the backflow preventing member 300.

In addition, when the backflow preventing member 300 is provided in a plate shape, there is an advantage in that the internal pressure reference value at which the opening/closing portion 310 opens may be easily redesigned by applying different thicknesses to the backflow preventing member 300.

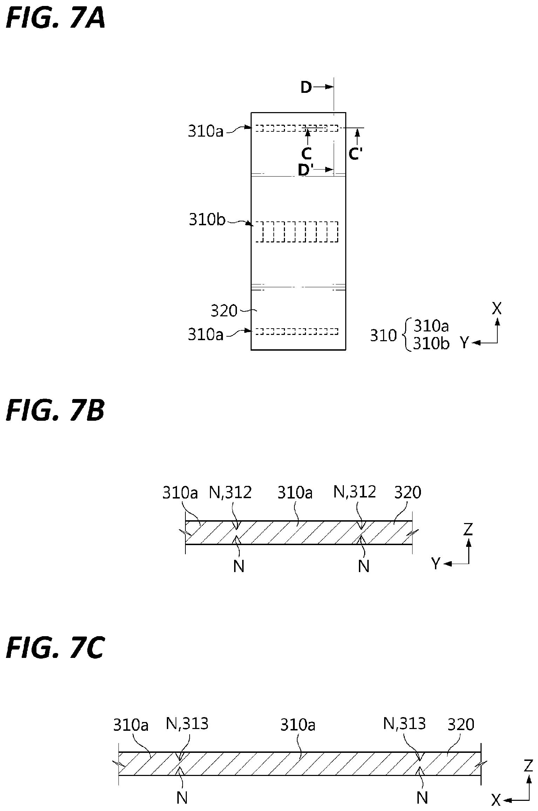

FIG. 7 is a cross-sectional view illustrating a backflow preventing member according to an embodiment of the present disclosure.

FIG. 7A is a plan view illustrating the backflow preventing member 300 according to an embodiment of the present disclosure, FIG. 7B is a cross-sectional view taken along line C-C' of FIG. 7A, and FIG. 7C is a cross-sectional view taken along line D-D' of FIG. 7A.

Referring to FIGS. 7A to 7C, the opening/closing portions 310 may be formed by notching the backflow preventing member 300. For example, as illustrated in FIG. 7B, notches may be formed between two adjacent first opening/closing portions 310a and between a first opening/closing portion 310a and the main body 320, and these notches may constitute the opening ends 312 of the first opening/closing portions 310a. Meanwhile, although not illustrated, notches may also be formed between two adjacent second opening/closing portions 310b and between a second opening/closing portion 310b and the main body 320, thereby constituting the opening ends 312 of the second opening/closing portions 310b.

As illustrated in FIG. 7C, notches may be formed between the main body 320 and the respective first opening/closing portions 310a, and these notches may constitute the connecting ends 313 of the first opening/closing portions 310a. Meanwhile, although not illustrated, notches may be formed between the main body 320 and the respective second opening/closing portions 310b, thereby constituting the connecting ends 313 of the second opening/closing portions 310b.

As described above, when the opening/closing portions 310 are formed by notching, the opening/closing portions 310 may be provided in the form of a predetermined breaking line that remains closed in a normal state and may be ruptured by the internal pressure of the vent gas VG when a thermal event occurs. In addition, since the opening/closing portions 310 may be manufactured by notching the backflow preventing member 300, the productivity or manufacturability of the backflow preventing member 300 may be improved.

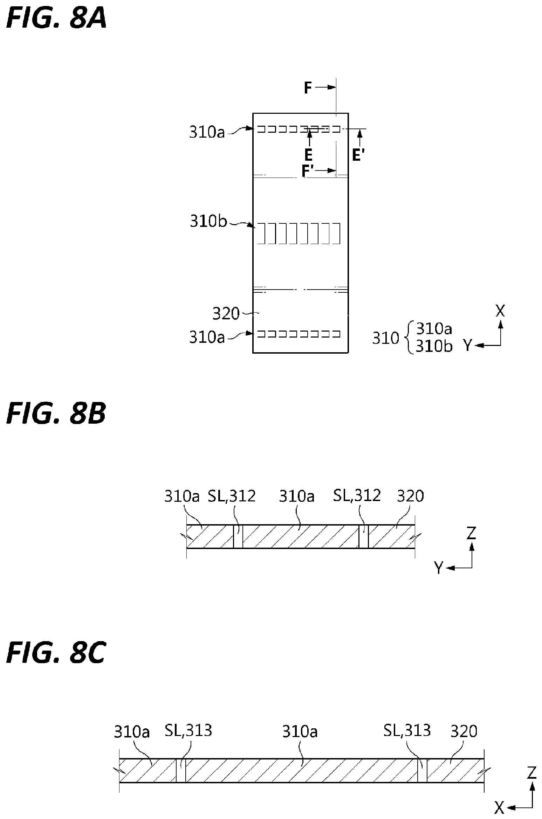

FIG. 8 is a cross-sectional view illustrating a backflow preventing member according to a modification of an embodiment of the present disclosure.

FIG. 8A is a plan view illustrating the backflow preventing member 300 according to a modification of an embodiment of the present disclosure, FIG. 8B is a cross-sectional view taken along line E-E' of FIG. 8A, and FIG. 8C is a cross-sectional view taken along line F-F' of FIG. 8A.

Referring to FIGS. 8A to 8C, the opening/closing portions 310 may be formed by slitting the backflow preventing member 300. For example, as illustrated in FIG. 8B, slits may be formed between two adjacent first opening/closing portions 310a and between a first opening/closing portion 310a and the main body 320, and these slits may constitute the opening ends 312 of the first opening/closing portions 310a. Meanwhile, although not illustrated, slits may also be formed between two adjacent second opening/closing portions 310b and between a second opening/closing portion 310b and the main body 320, thereby constituting the opening ends 312 of the second opening/closing portions 310b.

As illustrated in FIG. 8C, slits may be formed between the main body 320 and the respective first opening/closing portions 310a, and these slits may constitute the connecting ends 313 of the first opening/closing portions 310a. Meanwhile, although not illustrated, slits may be formed between the main body 320 and the respective second opening/closing portions 310b, thereby constituting the connecting ends 313 of the second opening/closing portions 310b.

When the opening/closing portions 310 are configured as described above, the opening/closing portions 310 may be manufactured by slitting the backflow preventing member 300, thereby improving the productivity or manufacturability of the backflow preventing member 300.

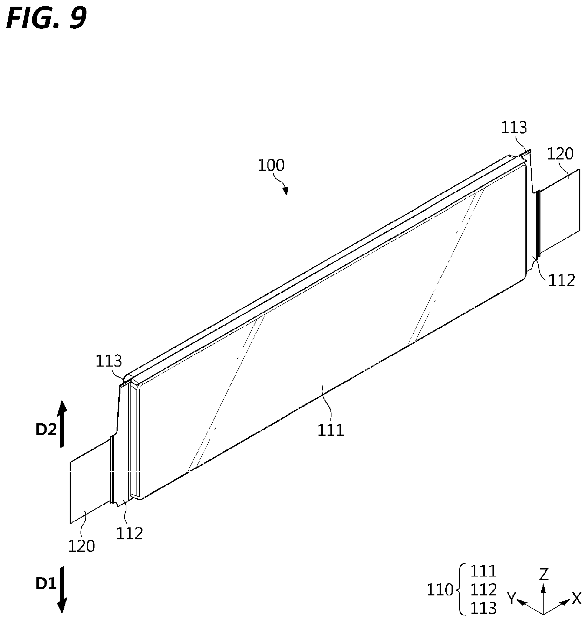

FIG. 9 illustrates a battery cell according to an embodiment of the present disclosure.

Referring to FIG. 9, the battery cell 100 according to an embodiment of the present disclosure may include a cell case 110 and electrode leads 120. An electrode assembly in which a positive electrode, a negative electrode, and a separator are stacked may be accommodated inside the cell case 110. The cell case 110 may include a housing portion 111, sealing portions 112, and folding portions 113. The electrode assembly may be accommodated in the housing portion 111. The sealing portions 112 may be at portions of the peripheral edge of the housing portion 111 that are at least partially sealed. For example, when the housing portion 111 has a substantially rectangular shape, the sealing portions 112 may be provided on three side portions among the four side portions of the peripheral edge of the housing portion 111 and may not be provided on one side portion (the -Z direction side portion). The folding portion 113 may be a portion where a portion of the sealing portions 112 is folded and may be provided, for example, on the other side portion (the +Z direction side portion) of the housing portion 111. The electrode leads 120 may protrude toward opposite sides of the battery cell 100 (e.g., both sides in the X-axis direction). The electrode leads 120 may be electrically connected to the electrode assembly and configured to protrude toward opposite sides of the battery cell 100. In addition, the electrode leads 120 may be configured to protrude in one direction only rather than toward opposite sides of the battery cell 100.

Meanwhile, among the sealing portions 112 of the battery cell 100, a bat ear or dog ear slightly protruding outward may be formed on a portion opposite to the folding portion 113. A (1-1)^{th} vent hole VH1-1 formed in the battery assembly 10 may correspond to the bat ear or dog ear.

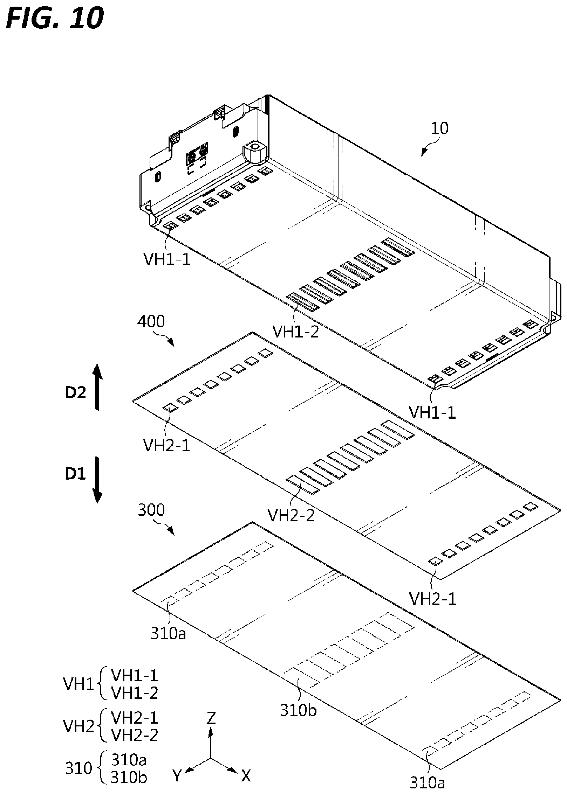

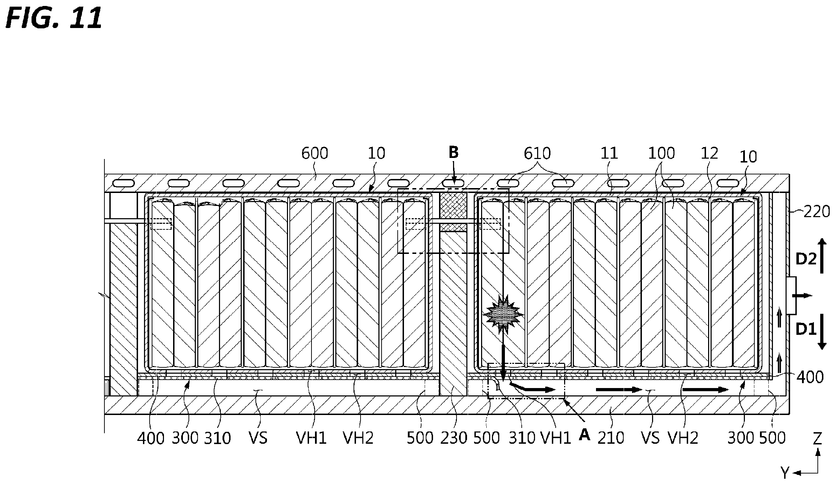

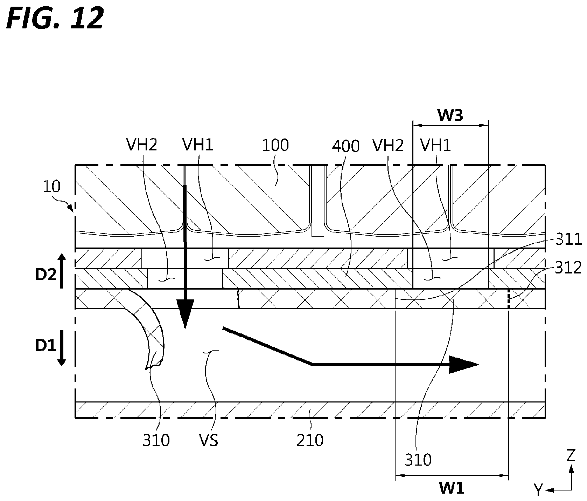

FIG. 10 is an exploded perspective view of a battery assembly 10 according to another embodiment of the present disclosure, illustrating a state in which a bottom plate 400 is disposed between the battery assembly 10 and a backflow preventing member. FIG. 11 is a side cross-sectional view illustrating a battery pack 1 according to another embodiment of the present disclosure, and FIG. 12 is an enlarged side cross-sectional view illustrating portion A of FIG. 11.

Hereinafter, with reference to FIGS. 10 to 12, the battery pack 1 according to another embodiment of the present disclosure will be described in detail. The battery pack 1 according to another embodiment of the present disclosure may further include a bottom plate 400.

The bottom plate 400 may be disposed between the battery assembly 10 and the pack case 200. The bottom plate 400 may be disposed between the battery assembly 10 and the bottom unit 210. The bottom plate 400 may be disposed on the first side D1 of the battery assembly 10. The bottom plate 400 may include a second vent hole VH2 corresponding to the first vent hole VH1. The second vent hole VH2 may be provided in a number and position corresponding to the first vent hole VH1. The second vent hole VH2 may have the same or substantially similar shape as the first vent hole VH1.

The second vent hole VH2 may include a (2-1)^{th} vent hole VH2-1 and a (2-2)^{th} vent hole VH2-2. The (2-1)^{th} vent hole VH2-1 may correspond to the (1-1)^{th} vent hole VH1-1, and the (2-2)^{th} vent hole VH2-2 may correspond to the (1-2)^{th} vent hole VH1-2.

As illustrated in FIGS. 10 to 12, the bottom plate 400 may be disposed between the battery assembly 10 and the backflow preventing member 300. Unlike what is illustrated in the drawings, the bottom plate 400 may be disposed between the backflow preventing member 300 and the bottom unit 210 on the first side D1 of the backflow preventing member 300.

The bottom plate 400 may support the battery assembly 10. Accordingly, when the battery pack 1 includes the bottom plate 400, the battery assembly 10 may be stably and firmly supported, and there may be less need for the backflow preventing member 300 to support the battery assembly 10, thereby allowing the backflow preventing member 300 to be manufactured relatively thin.

The bottom plate 400 may include a material having rigidity and flame-resistant properties. In this case, the bottom plate 400 may maintain its shape without melting or breaking even when exposed to high-temperature and high-pressure vent gas VG.

The rigidity of the bottom plate 400 may be greater than that of the backflow preventing member 300. For example, the bottom plate 400 may include a material having greater rigidity than the material of the backflow preventing member 300. Alternatively, when the bottom plate 400 and the backflow preventing member 300 are made of the same material, the bottom plate 400 may have a thickness greater than that of the backflow preventing member 300.

As such, when the rigidity of the bottom plate 400 is greater than that of the backflow preventing member 300, the bottom plate 400 may support the battery assembly 10 more stably and firmly, allowing the backflow preventing member 300 to be made thinner.

The size of the opening/closing portion 310 may be larger than the size of the first vent hole VH1 or the size of the second vent hole VH2. For example, the width W1 of the opening/closing portion 310 in the Y-axis direction may be larger than the width W2 of the first vent hole VH1 or the width W3 of the second vent hole VH2 in the Y-axis direction (see FIGS. 6 and 12). Alternatively, for example, the length of the opening/closing portion 310 in the X-axis direction may be larger than the length of the first vent hole VH1 or the length of the second vent hole VH2 in the X-axis direction.

In this case, deformation of the opening/closing portion 310 toward the second side D2 may be effectively prevented or suppressed, thereby more effectively blocking backflow of vent gas VG.

Meanwhile, unlike what is illustrated in the drawings, the backflow preventing member 300 may be disposed between the battery assembly 10 and the bottom plate 400. In this case, the size of the opening/closing portion 310 may be larger than the size of the first vent hole VH1, and the size of the second vent hole VH2 may be larger than the size of the opening/closing portion 310. In this case, as described above, deformation of the opening/closing portion 310 toward the second side D2 may be prevented or suppressed, while the opening/closing portion 310 may be easily deformed toward the first side D1.

Referring to FIGS. 5 and 11, the first side D1 may be the lower side. The lower side may be, for example, the side in the -Z direction. When the first side D1 is the lower side, the first vent holes VH1 may be provided below the battery assembly 10, and the vent space VS may be disposed on the lower side of the first vent holes VH1.

In a vehicle in which the battery pack 1 is mounted, an occupant, such as a driver, is generally positioned above the battery cells 100. If the aforementioned thermal event occurs and the vent gas VG is discharged upward from the battery cells 100, it may pose a significant risk to the occupant's safety. Therefore, as in the present disclosure, when first vent holes VH1 are provided on the lower side of the battery cells 100 or the battery assembly 10 and the vent space S is disposed on the lower side of the first vent holes VH1, the vent gas VG may be guided downward, opposite to the occupant.

Referring to FIGS. 5 and 11, the battery pack 1 according to an embodiment of the present disclosure may further include a cooling member 600.

The cooling member 600 may be disposed on the second side D2 of the battery assembly 10. The cooling member 600 may be configured to cool the battery assembly 10.

When the cooling member 600 is disposed on the second side D2 of the battery assembly 10, the movement of vent gas VG discharged from a battery cell 100 toward the second side D2 of the battery assembly 10 may be prevented or suppressed. Accordingly, the discharge of the vent gas VG may be more smoothly guided toward the first side D1 rather than the second side D2 of the battery assembly 10, and at the same time, cooling of the battery assembly 10 may be performed on the second side D2 of the battery assembly 10, thereby more effectively preventing or suppressing a thermal event occurring in the battery cell 100.

Meanwhile, the cooling member 600 may include at least one cooling channel 610. A cooling medium may flow through the cooling channel 610.

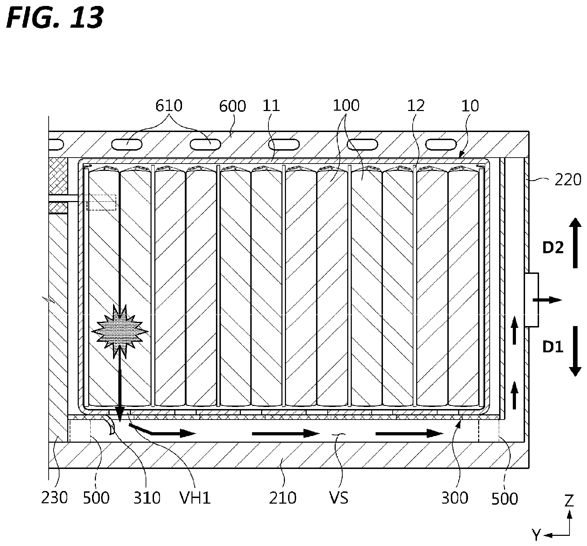

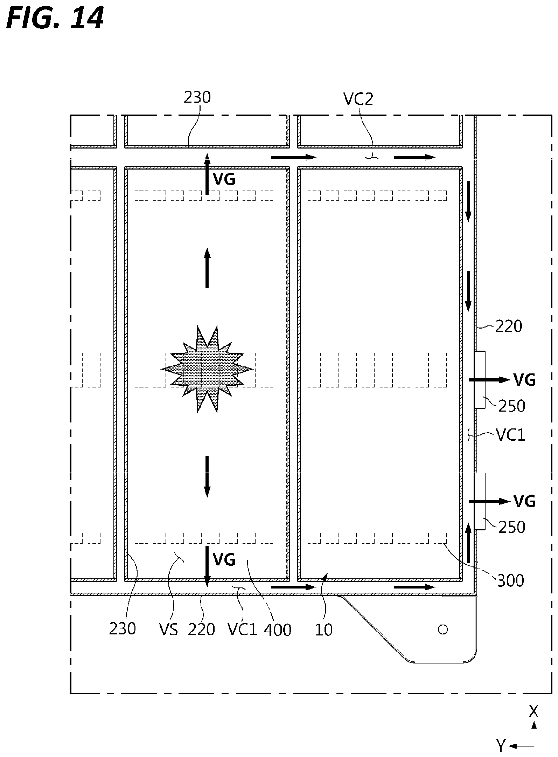

FIG. 13 is a side cross-sectional view illustrating another portion of the cross-section taken along line I-I' of FIG. 1, and FIG. 14 is a cross-sectional view illustrating a portion of the cross-section taken along line II-II' of FIG. 1.

Hereinafter, with reference to FIGS. 1, 2, 13, and 14, the battery pack 1 according to an embodiment of the present disclosure will be described in further detail.

The pack case 200 may include a side wall 220. The side wall 220 may surround the accommodation space S of the pack case 200. The side wall 220 may be disposed along an edge of the pack case 200. Accordingly, the battery assembly 10 may be disposed inside the side wall portion 220 of the pack case 200. The side wall 220 may include a first venting channel VC1. The first venting channel VC1 may be formed inside the side wall 220. The vent gas VG may flow through the first venting channel VC1. The first venting channel VC1 may be in communication with the vent space VS.

As described above, when the first venting channel VC1 is formed in the side wall 220, the vent gas VG may flow through the vent space VS into the first venting channel VC1. A battery assembly 10 may be disposed inside the side wall 220, and the side wall 220 may be disposed outside the battery assembly 10. Accordingly, when the first venting channel VC1 is formed in the side wall 220, the vent gas VG may flow outside the battery assembly 10.

The pack case 200 may include partition frames 230. The partition frames 230 may partition an interior of the accommodation space S of the pack case 200. The partition frames 230 may be disposed inside the side wall 220. The battery assembly 10 may be disposed between the side wall 220 and the partition frame 230 or between two adjacent partition frames 230. A venting channel VC2 may be formed in the partition frames 230. The second venting channel VC2 may be formed inside the partition frames 230. The vent gas VG may flow through the second venting channel VC2. The second venting channel VC2 may be in communication with the vent space VS.

When the second venting channel VC2 is formed in the partition frames 230 as described above, the vent gas VG may flow through the vent space VS into the second venting channel VC2. The battery assembly 10 may be disposed between the side wall 220 and a partition frame 230 or between two adjacent partition frames 230, and the partition frames 230 may be disposed outside the battery assembly 10. Accordingly, when the second venting channel VC2 is formed in the partition frames 230, the vent gas VG may flow outside the battery assembly 10.

The pack case 200 may include a venting device 250. The venting device 250 may allow communication between the vent space VS and the outside. The venting device 250 may be configured to allow the vent gas VG to be discharged to the outside. The venting device 250 may be formed in the form of a simple hole penetrating the pack case 200. Alternatively, in addition to a fully open form, the venting device 250 may be configured to remain closed under normal conditions and to be opened when a change in, for example, pressure or temperature occurs inside the pack case 200.

The venting device 250 may be provided on the side wall 220. The venting device 250 may be provided in plural. The venting device 250 may be in communication with the first venting channel VC1. The venting device 250 may be in communication with the second venting channel VC2.

As such, when the pack case 200 further includes the venting device 250, the vent gas VG flowing through the vent space VS may be more smoothly discharged to the outside of the pack case 200.

Meanwhile, the pack case 200 may further include a bottom unit 210 and a pack cover 240. The bottom unit 210 may form a bottom of the pack case 200. The bottom unit 210 may form a bottom of the accommodation space S. The side wall 220 may surround the bottom unit 210 and define the accommodation space S together with the bottom unit 210. The pack cover 240 may be disposed to cover the accommodation space S. The pack cover 240 may be coupled to the side wall 220 or the partition frames 230.

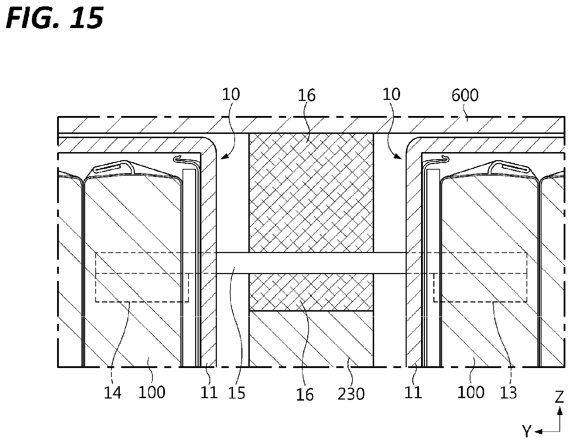

FIG. 15 is an enlarged side cross-sectional view illustrating portion B of FIG. 5 or FIG. 11.

Hereinafter, with reference to FIG. 15, a connection busbar 15 of the battery pack 1 according to an embodiment of the present disclosure will be described in detail.

The battery pack 1 may further include a connection busbar 15. When a plurality of battery assemblies 10 are accommodated in the pack case 200, the connection busbar 15 may electrically connect one of the battery assemblies 10 to another battery assembly 10. For example, the connection busbar 15 may electrically connect a negative terminal 13 of one of the battery assemblies 10 to a positive terminal 14 of another battery assembly 10.

In this case, the connection busbar 15 may be disposed across a partition frame 230 disposed between the two battery assemblies 10. The connection busbar 15 may be sealed by a sealing member 16. The sealing member 16 may be disposed, for example, between the connection busbar 15 and the partition frame 230. The sealing member 16 may be disposed, for example, between the connection busbar 15 and the pack cover 240.

The sealing member 16 may include a material having flame-resistant properties capable of blocking heat or flame. The sealing member 16 may include a rubber material or a foam material for sealing.

When the connection busbar 15 connects the two battery assemblies 10 to each other, a gap may be formed between the two battery assemblies 10. However, when the sealing member 16 is included as described above, the sealing member 16 may seal the gap. In this case, inflow of vent gas VG through the connection busbar 15 from one of the battery assemblies 10 toward the other of the battery assemblies 10, or *vice versa*, may be prevented or suppressed.

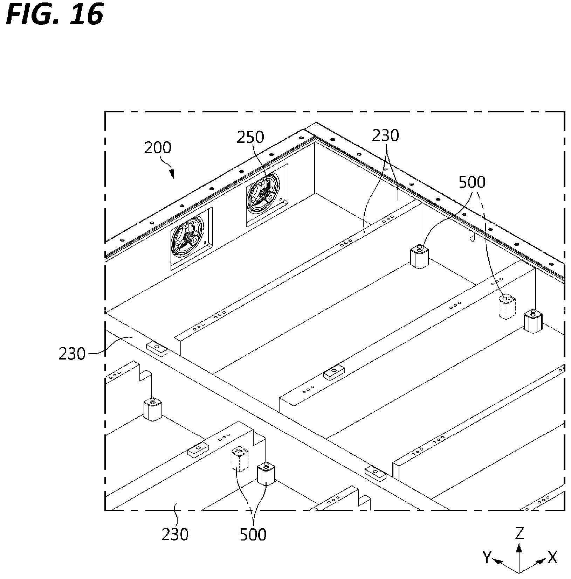

FIG. 16 is an enlarged perspective view illustrating a portion of the pack case 200 of the battery pack 1 according to an embodiment of the present disclosure.

With reference to FIGS. 5, 11, and 16, mounting blocks 500 of the battery pack 1 according to an embodiment or another embodiment of the present disclosure will be described in detail.

The battery pack 1 according to the present disclosure may further include mounting blocks 500 disposed between the battery assemblies 10 and the pack case 200. The mounting blocks 500 may be disposed on the first side D1 of the battery assemblies 10. The mounting blocks 500 may be disposed, for example, on the lower side of the battery assemblies 10, i.e., on the -Z direction side. The mounting blocks 500 may be disposed at positions corresponding to edges of the battery assemblies 10. The mounting blocks 500 may be disposed, for example, on the bottom unit 210 of the pack case 200, at positions corresponding to respective corners of the battery assemblies 10.

The mounting blocks 500 may support the battery assemblies 10 toward the second side D2. For example, the mounting blocks 500 may support the battery assemblies 10 upward, i.e., toward the +Z direction. The mounting blocks 500 may space apart the battery assemblies 10 and the pack case 200. For example, with the mounting blocks 500, the battery assemblies 10 and the pack case 200 may be spaced apart from each other in the vertical direction or Z-axis direction.

The mounting blocks 500 may form a vent space VS by spacing apart the battery assemblies 10 and the pack case 200. Accordingly, when the battery pack 1 according to the present disclosure further includes the mounting blocks 500, the vent space VS may be more easily and reliably defined.

Meanwhile, although not illustrated, the battery pack 1 according to the present disclosure may further include various devices for controlling charging and discharging of the battery cells 100, such as a battery management system (BMS), a current sensor, and a fuse.

In the foregoing, examples of the battery pack 1 according to the present disclosure have been described. The technical spirit of the present disclosure is not limited to these examples and may also include any combination of two or more of them.

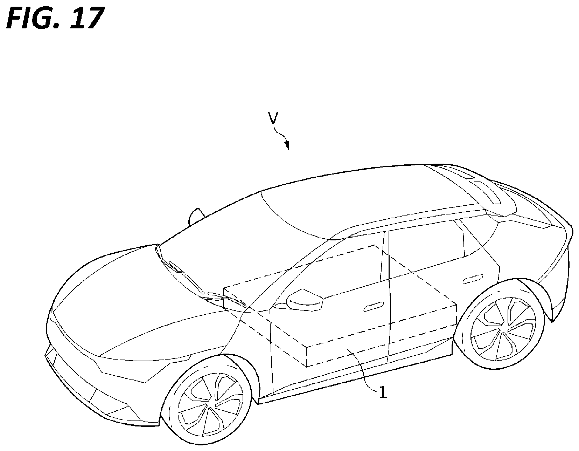

FIG. 17 is a view illustrating a vehicle according to an embodiment of the present disclosure.

Referring to FIG. 17, a battery pack 1 according to the present disclosure may be applied to a vehicle V, such as an electric vehicle or a hybrid vehicle. For example, the vehicle V according to the present disclosure may include the battery pack 1 according to the present disclosure. The battery pack 11 may be installed in a body frame below the vehicle seats or in a trunk space. In addition, the vehicle V according to an embodiment of the present disclosure may further include various other components included in a vehicle in addition to the battery pack 1. For example, the vehicle V according to an embodiment of the present disclosure may further include components such as a vehicle body, a motor, or a control unit such as an ECU (electronic control unit), in addition to the battery pack 1 according to an embodiment of the present disclosure.

In addition, it may well be possible that the battery pack 1 according to an embodiment of the present disclosure may be provided not only in a vehicle V but also in other devices, mechanisms, or facilities, such as an energy storage system (ESS) using a secondary battery.

In the present specification, terms indicating directions such as upper, lower, left, right, front, and rear are used merely for the convenience of description, and it will be apparent to those ordinarily skilled in the art that such terms may vary depending on the position of the object or the position of the observer.

While the present disclosure has been described above with reference to several embodiments and drawings, the present disclosure is not limited thereto, and various changes and modifications can be made by a person ordinarily skilled in the art to which the present disclosure pertains without departing from the technical spirit of the present disclosure and the equivalent scope of the claims to be described below.

### [Reference Signs]

1: battery pack
10: battery assembly
11: assembly housing
11a: bottom cover
12: barrier
13: negative terminal
14: positive terminal
15: connection busbar
16: sealing member
10: battery cell
110: cell case
111: housing portion
112: sealing portion
113: folding portion
120: electrode lead
200: pack case
210: bottom unit
220: side wall
230: partition frame
240: pack cover
250: venting device
300: backflow preventing member
310: opening/closing portion
310a: first opening/closing portion
310b: second opening/closing portion
311: fixed end
312: opening end
313: connecting end
320: main body
400:bottom plate
500: mounting block
600: cooling member
610: cooling channel
D1: first direction
D2: second direction
S: accommodation space
VG: venting gas
VH1: first vent hole
VH1-1: (1-1)^{th} vent hole
VH1-2: (1-2)^{th} vent hole
VH2: second vent hole
VH2-1: (2-1)^{th} vent hole
VH2-2: (2-2)^{th} vent hole
VS: vent space
VC1: first venting channel
VC2: second venting channel
V: vehicle

## Claims

1. A battery pack comprising:
a battery assembly including a plurality of battery cells;
a pack case in which an accommodation space is defined to accommodate the battery assembly;
at least one first vent hole provided on a first side of the battery assembly;
a vent space provided on the first side of the first vent hole and formed in the pack case; and
a backflow preventing member having at least one opening/closing portion disposed to correspond to the first vent hole,
wherein the opening/closing portion is opened to allow communication between the first vent hole and the vent space when an internal pressure of the battery assembly reaches or exceeds a predetermined reference value.

2. The battery pack according to claim 1, wherein the opening/closing portion is closed to block communication between the first vent hole and the vent space when the internal pressure of the battery assembly is below the predetermined reference value.

3. The battery pack according to claim 1, wherein the opening/closing portion includes:
a fixed end fixed to the backflow preventing member, and
an opening end disposed apart from the fixed end on one side and configured to open when the internal pressure of the battery assembly reaches or exceeds the predetermined reference value.

4. The battery pack according to claim 3, wherein the pack case includes a bottom unit disposed apart from the battery assembly on the first side,
the vent space is defined in a space between the battery assembly and the bottom unit, and
the distance between the fixed end and the opening end is greater than the distance between the battery assembly and the bottom unit.

5. The battery pack according to claim 1, wherein the backflow preventing member includes a material having rigidity and flame-resistant properties.

6. The battery pack according to claim 1, wherein the first vent hole includes a (1-1)^{th} vent hole positioned substantially at the center of the battery assembly, and a (1-2)^{th} vent hole positioned outside the (1-1)^{th} vent hole in the battery assembly, and
the opening/closing portion includes a first opening/closing portion corresponding to the (1-1)^{th} vent hole, and a second opening/closing portion corresponding to the (1-2)^{th} vent hole.

7. The battery pack according to claim 1, wherein the backflow preventing member is provided in the form of a plate, and
the opening/closing portion is integrally formed with the backflow preventing member.

8. The battery pack according to claim 7, wherein the opening/closing portion is formed by notching the backflow preventing member.

9. The battery pack according to claim 7, wherein the opening/closing portion is formed by slitting the backflow preventing member.

10. The battery pack according to claim 1, further comprising:
a bottom plate disposed between the battery assembly and the pack case, having a second vent hole formed to correspond to the first vent hole and configured to support the battery assembly.

11. The battery pack according to claim 10, wherein the rigidity of the bottom plate is greater than the rigidity of the backflow preventing member.

12. The battery pack according to claim 10, wherein the size of the opening/closing portion is larger than the size of the first vent hole or the size of the second vent hole.

13. The battery pack according to claim 1, wherein the first side is a lower side.

14. The battery pack according to claim 1, further comprising:
a cooling member configured to cool the battery assembly and disposed on a second side of the battery, the second side being an opposite side to the first side.

15. The battery pack according to claim 1, wherein the pack case includes a venting device allowing communication between the vent space and the outside.

16. The battery pack according to claim 1, wherein the pack case includes a partition frame partitioning the accommodation space,
a plurality of battery assemblies are accommodated in the accommodation space, and
the pack case further includes a connection busbar electrically connecting one of the battery assemblies to another battery assembly across the partition frame; and a sealing member configured to seal the connection busbar.

17. A vehicle comprising at least one battery pack according to claim 1.
